# EUROPEAN PATENT SPECIFICATION

(11) **EP 3 448 171 B1**
(45) Date of publication and mention of the grant of the patent: **06.11.2019**
(21) Application number: 17739719.7
(22) Date of filing: 05.04.2017
(51) Int. Cl.: A23L 3/00, B65B 25/00, B65B 25/06, B65B 55/10, B65B 55/02

(54) **PRODUCTION METHOD FOR ANTI-MICROBIAL FOOD PACKAGING**
HERSTELLUNGSVERFAHREN FÜR ANTIMIKROBIELLE LEBENSMITTELVERPACKUNG
PROCÉDÉ DE FABRICATION D'UN EMBALLAGE ALIMENTAIRE ANTIMICROBIEN

(30) Priority: 11.05.2016 TR 201606237
(43) Date of publication of application: 06.03.2019
(73) Proprietor: Eti Gida Sanayi Ve Ticaret Anonim Sirketi, Eskisehir (TR)
(72) Inventor: KANATLI, Ahmet Firuzhan, Eskisehir (TR)
(74) Representative: Yamankaradeniz, Kemal
(86) International application number: PCT/TR2017/050133
(87) International publication number: WO 2017/196275

(56) References cited:
- EP-A1- 2 444 501
- WO-A1-79/01074
- WO-A1-2008/111893
- FR-A1- 2 618 408
- KR-A- 20010 044 617
- KR-A- 20060 118 738
- US-A1- 2004 043 238
- US-A1- 2010 272 769

## Description

### Technical Field

The present invention relates to anti-microbial packaging used in the food sector. This invention especially relates to a method to be used in packaging of food products with high water activity (aw ≥ 0.7), to render anti-microbial (anti-bacterial and anti-fungal) properties to the inner surface of the packaging material by two-step spraying technology using nano-silver added calcium phosphate based anti-microbial material at the last stage of the production processes of the known packaging materials, in order to decrease the use of preservatives in food products, and to the anti-microbial food packaging obtained by this method.

### Prior Art

To extend the quality shelf-life of some food, various conventional preservation methods are being used, such as heat treatment (pasteurization, etc.), freezing, drying or reducing water activity, pH control, storage under controlled atmosphere, packaging under modified atmosphere or adding preservatives.

Water activity expressed unbound (free) water in food and is an important factor in chemical and enzymatic reactions and in growth of microorganisms in food. Food with high water activity (aw ≥ 0.7) are more sensitive to oxidation, enzymatic reactions, and microbial changes. When a preservation technique is not used, decomposition reactions are more rapid. Thus, maintaining the quality during the shelf-life is harder for food products with high water activity (aw ≥ 0.7) compared to food products with low water activity. Preservatives such as organic acids and their salts, sulphites, antibiotics, bacteriocins, enzymes and alcohols are commonly being used to especially hinder microbial growth and to maintain the quality during the shelf-life. However, this is in contradiction to the increasing consumer demands for food without preservatives (Han, 2000). Furthermore, use of some preservatives vary depending on countries. Use of some preservatives such as sorbate, potassium sulphite/nitrite, calcium sulphite, formic acid and its salts, formaldehyde, BHT/BHA have been banned in the EU countries and some Asian countries. In Muslim countries, preservatives that are of pig or human origin or that contain alcohol are not used.

Packaging is ensuring that the food is protected against environmental impacts such as blows, chemical impacts, harmful organisms, heat, light, air. In addition, it facilitates transportation and handling of food, increases the attractiveness of the product and informs the consumer about the food. That the consumer demands in recent years have increased in favour of less processed food, which have less damaged natural properties, which do not contain preservatives and which have high quality shelf-life have led to the emergence of new food packaging technologies such as packaging under modified atmosphere and active packaging (Vermeiren et al., 2002).

Packaging under modified atmosphere is packaging the product using packaging materials suitable for the nature of the product and replacing the gaseous atmosphere in the packet by gases such as carbon dioxide, nitrogen or mixtures thereof. It is possible to extend the high quality shelf-life of the product that does not contain preservatives by using packaging under modified atmosphere instead of packaging under normal atmosphere (Suppakul et al., 2003).

Active packaging can be defined as rendering additional properties to packaging materials used as and known to be a barrier to external factors. Active packaging has many functions that conventional packaging systems do not have. Active packaging is not only protection and visuality. It can keep under control the events occurring in the packaging and may interact to preserve the quality of the food in accordance with the varying conditions. It is maintained that the active packaging system is an appropriate packing method with respect to consumer demands and health since it is possible to extend the shelf-life of the product without an additive. The use of such food packaging technologies has increased as the importance of food safety and high quality shelf-life gains importance. Active packaging applications are oxygen scavenging, carbon dioxide scavenging/spreaders, moisture controllers, ethylene absorbers, taste/aroma absorbers and films containing anti-microbial/antioxidant agents (Appendini and Hotchkiss, 2002; Vermeiren et al., 2002; Cha and Chinnan, 2004; Brody et al., 2008).

Oxygen scavengers, a form of active packaging, are placed into the packaging in small sachets to prevent oxidation and microbial decomposition. The oxygen scavenger absorbs prevents the growth of aerobic microorganisms and oxidation by absorbing the oxygen released into the packaging from the food product itself after packing or the oxygen in the gap between the food and the packet. Hence, it is ensured that the food maintains its freshness and taste. Oxygen scavengers can be used by themselves or together with packaging technology under modified atmosphere (Vermeiren et al., 1999).

The basis of anti-microbial packaging, which is another form of active packaging, is the principle to control the migration of anti-microbial compounds to food. This made by ensuring anti-microbial activity by introducing an anti-microbial agent to anyone of the food product, packaging material or the gap between these. Therefore, there are studies on rendering anti-microbial property by introducing an active agent directly to food or the gap. The anti-microbial substances added to the packaging material or medium limit prevent microbial growth by decreasing the number or growth rates of live microorganisms, by extending the lag period of microorganisms (Han, 2000). Anti-microbial packaging methods are as follows:
1. Introducing sachets containing volatile anti-microbial agents into the pack,
2. Introducing volatile and non-volatile anti-microbial agents directly into the film,
3. Coating or adsorbing the anti-microbial substances on to the film surface,
4. Immobilization of anti-microbial substances on to the polymer surface thorough ionic or covalent bonding,
5. Directly producing anti-microbial film which is edible,
6. Modifying the surface properties of the packaging material by laser or similar light sources (Appendini and Hotchkiss, 2002; Do 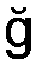 an et al., 2009).

The anti-microbial films obtained by these methods show their activities in various ways. Activity occurs by direct contact of the anti-microbial agent with the food surface (diffusion), by migration of the anti-microbial agent into the gap between the food and the packaging (sorption) or when it is immobilized onto the film surface (immobilization). Another application is rendering anti-microbial property to the film surface by chemical and physical modification (surface modification) (Han, 2000; Vermeiren et al., 2002; Cha and Chinnan, 2004).

There are a number of anti-microbial substances that can be used in anti-microbial packaging, with gases and bacteriocines such as organic acids and salts thereof, sulphites, antibiotics, alcohols, peptides, peroxide, ozone, chlorine oxide, lysocin, nisin, EDTA, BHT, BHA being widely used (Suppakul et al., 2003). Various plant and spice extracts also contain anti-microbial compounds active against many species of microorganisms. It is possible to provide anti-microbial effect by natural products such as lemon, anasone, tangerines, grapefruit, cinnamon leaves, orange, eucalyptus, peppermint, rosemary, thyme, basil, sweet raziyane, pine, ginger, laurel, carnation and the like. Particularly, cinnamon leaf, rosemary, thyme, laurel and carnation are more effective in bakery products. The thyme volatile oil is the main volatile oil used in studies on use of volatile oils together with food packaging materials, due to its strong anti-microbial activity (Brody et al., 2008). Many volatile oil components such as carvacrol, cinnamaldehyde, eugenol, p-cymene, thymol and menthol are deemed by the EU as aromatics that can legally be used in food since they do not pose a risk for consumer health (EC, 2002). As it is in the EU, many volatile oil components can legally be used as food additives or GRAS in US (Brody et al., 2008; Nedorostova et al., 2009).

It is known that the ions of metals such as silver, copper, zinc also have anti-microbial activity. When such metals are compared, silver is the most resistant metal according to the resistance order of metal ions against microorganisms (Ag > Hg > Cu > Cd > Cr > Pb > Co > Au > Zn > Fe > Mn > Mo > Sn). The biological feature of silver is related to silver ions from silver salts. Cationic silver groups bid tightly to electron givers containing sulphur, oxygen or nitrogen. Silver ions substitute like other fundamental metal ions. The anti-bacterial effect mechanism of silver ions inhibit bacterial division through the thiol (sulphydryl, -SH) groups in the enzymes and proteins, it destructs the cell membrane and its content. Virucide effect is a consequence of bonding to the -SH groups. It can also bind the fungus groups to affect them. Silver causes K⁺ release from microorganisms; many enzymes in the cytoplasm and the cytoplasm membrane are targets of the effect of silver. Silver ions also interacts with the nucleic acids in the microorganism.

Silver has a very old and wide use in medicine as an anti-microbial agent. It has been preferred because it is cheaper than many materials and can easily be produced. In addition, it is the element with lowest toxic (poisonous) effect on humans. Silver ions do not react with and harm any cell in the human body. The membranes of human cells prevent impact of silver ion inside the cell. Thus, silver ions do not have any potential carcinogen or mutagen effect for humans; however, they don't cause a sensitizing or irritating effect upon contact with skin (Schierholz et al., 1999; Vermeiren et al., 2002; Do 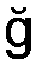 an et al., 2009). There is about 1 mg of silver in our bodies. The normal silver blood level is 5 mg/ml. Depending on the food we eat, daily 0.02 - 0.08 mg silver enters our bodies orally. Almost all of the silver taken in this way are excreted by the kidneys. The European Food Safety Authority (EFSA) considers some silver compounds as a safe anti-microbial additive for packaging materials. The most commonly used silver compound is silver nitrate that releases silver ions most rapidly.

For the controlled release of the silver ions with anti-microbial properties in the desired media, such ions should be adsorbed on some ceramic-inorganic lattice structure during synthesis. Anti-microbial ceramics can be classified as amorphous silica, zeolite and calcium phosphate based depending on the carrier. The common property of these materials is their large crystal structure. Hence, the metal ions can enter the system and can be effective on the microorganisms. Since such ceramics may directly contact humans, they must be biologically compatible. Biomaterial studies have demonstrated that calcium phosphates have high biocompatibility. In many implants used in biomedicine, hydroxyapatite which is a calcium phosphate derivative with high biocompatibility is used in various places in the human body. In addition, the rate of cation change of hydroxyapatite with metal ions such as Ag⁺², Cu⁺², Zn⁺² and the like is high.

One of the most successful commercial applications of anti-microbial packaging is the introduction of sachets containing a volatile anti-microbial agent into the packaging. It is used especially in packaging bakery products, to inhibit the growth of mold, yeast and bacteria (Appendini and Hotchkiss, 2002; Vermeiren et al., 2002; Brody et al., 2008).

Plastic-based, flexible films used frequently in packaging are rendered anti-microbial properties by various methods. The most commonly used method is directly introducing the anti-microbial material into the film during film production to get an anti-microbial film. The extrusion method is mostly used in the production of anti-microbial films. In this method, the anti-microbial material is extruded together with the packaging material to obtain an anti-microbial film. The anti-microbial film is obtained by directly introducing the volatile or non-volatile anti-microbial substances that may be used in food into the packaging film (Han, 2000). In this method, the anti-microbial substance introduced into the film diffuses from inside the film to the film surface due to concentration difference. The anti-microbial substance diffusing to the film surface must be at a certain concentration at the film surface. Since the diffusion coefficient of the anti-microbial substance in the food is more than its diffusion coefficient within the film, the anti-microbial substance diffuses into the food and reduces the activity at the surface. Thus, in these systems, the controlled release of the anti-microbial substance from the film is ensured by a control layer or by encapsulation of the anti-microbial substance. Introducing foreign objects into the packaging together with these components for preserving and improving the packed products has also some disadvantages such as the change of organoleptic properties of the products, irregular distribution of the optical and preservative properties of the packaging and occurrence of holes/tears. Anti-bacterial activities are significantly affected by temperature and pH. The film manufacturing temperature may also decompose the anti-microbial agent. It is known that in some cases, the contents of the food may neutralize the anti-microbial agent. Therefore, the compatibility of the anti-microbial agent both with the packaging material and the food is a critical factor. In addition, in this method, since a large portion of the anti-microbial agent is embedded in the packaging material, its effect is very limited. When more anti-microbial agents are used to overcome this issue, both the cost and the barrier properties of the packaging are negatively affected (Vermeiren et al., 2002). On the other hand, the active agent may migrate in the long-term, may diffuse into the food and may cause negative impact on the environment as waste. Additionally, when these substances are non-volatile, the packaging material in which they have been introduced, has to contact food to obtain antimicrobial activity. Because preservation is provided by direct contact and when there is not direct contact between the product to be preserved and the packaging, this may lead to complete loss of desired activity (Appendini and Hotchkiss, 2002).

Another method used in anti-microbial film production is to coat the surface of the film with the anti-microbial agent or to adsorb it on the surface in association with some solvents. In this method, the anti-microbial agents preserve the food by inhibiting microbial growth by passing onto the surface of food or without passing onto the surface of food. In such systems, various anti-microbial agents of organic and inorganic origins are utilized. The anti-microbial compound is added into a polymer coating solution and stability is provided by coating the packaging film with the compound. Thus, the anti-microbial agents can pass into the food or into the gap between the packaging and the food. Furthermore, the coating method increases the effective time of the anti-microbial agent and inhibits overdose (the toxic dose for humans) as a result of controlled release of the anti-microbial agent from the film surface. However, in this method, it has been detected that when the binder used to bind the anti-microbial agents to the packaging and the anti-microbial powders are applied at the same time, the binder completely covers the anti-microbial powders, hinders the release of the agents and the interaction with the microorganisms, and some powders agglomerate. In case the anti-microbial agent is adsorbed on the surface, the anti-microbial agents are labile and can not establish a well adsorption on the surface, and there is the risk that they diffuse into the food (Appendini and Hotchkiss, 2002).

Anti-microbial films are also obtained by immobilizing anti-microbial peptide, enzyme or fungicides on the surfaces of polymers or other materials by ionic or covalent bonds. In such applications, the release or migration of the anti-microbial agent from the film is not necessary; to achieve the desired anti-microbial activity the food has to be in contact with the film. For immobilizing the anti-microbial agent to the polymer, both the polymer and the anti-microbial agent must have functional groups. Anti-microbial agents with functional groups are peptides, enzymes, polyamines and organic acids. In addition, in the immobilization process, there must be spacer molecules that will bind the polymer surface to the bio-active agent as well as the functional anti-microbial and polymer supports. If these molecules cannot provide adequate motion freedom, the contact of the active part of the anti-microbial agent with the microorganisms on the surface of food becomes difficult (Appendini and Hotchkiss, 2002; Vermeiren et al., 2002; Suppakul et al., 2003).

Generally, plastic and flexible films are used in anti-microbial packaging. In addition, they can be plastic-based or paper-based or edible. To this end, the anti-microbial agents can be added to natural substances such as polysaccharides (starch, alginate, cellulose, chitosan, carrageen or pectin), proteins (casein, whey protein, gelatine, fibrinogen, soya protein, wheat gluten, maize zein or egg albumin), oils and fats (fats, waxes or oils) to produce edible and biodegradable anti-microbial films (Appendini and Hotchkiss, 2002; Suppakul et al., 2003; Cha and Chinnan, 2004). Furthermore, with the use of biopolymers in food packaging, the dependency on plastic-based packaging is reduced and it becomes possible to add value to edible agricultural resources. They are preferred because environmental pollution is reduced since they can decompose in nature and they reduce the waste issue. However, the gas, water vapour and aroma barrier properties and mechanical properties of these edible anti-microbial films are worse than those of plastic films. They have a rather fragile structure. Hence, their commercial production is difficult.

The modification of polymer film surface by chemical or physical methods may also render anti-microbial properties to films. Some chemical compounds (acids, enzymes, etc.) having anti-microbial properties are introduced into the film surface by modifying the surface of polymers. This method is based on changing the surface properties of the packaging material by laser or similar light sources (Appendini and Hotchkiss, 2002; Suppakul et al., 2003). However, this method is more expensive compared to the extrusion and coating technologies (Ozdemir et al., 1999). In Patent No. WO 1991/06593, the film was rendered anti-microbial by modification of the surface by laser and similar light sources since the control of surface modification by chemical methods is not easy.

Other processes known in the prior art concerning this subject are given below:
Patent No. WO 2011/105978 A1 relates to "anti-bacterial packaging and production method for solid and liquid foods". In the production method of said packaging material, packaging, ozoning chamber, UV radiation source, cooling unit and silver coating is used.

Patent Application No. KR 20010044617 mentions anti-bacterial coating process on the packaging paper using inorganic substances. In the coating processed in the said invention and in the industry, synthetic chemicals and plastic-bases materials mostly containing silver are being used. Although these materials used for coating extend the high quality shelf-life of the product, synthetic chemicals have harmful effects on human health. In addition, paper packaging coated with synthetic chemicals are not suitable for recovery.

Patent No. KR 101168106 B1 relates to "anti-microbial compositions for coating and anti-microbial food packaging". The said anti-microbial composition is obtained by mixing soy protein, glycerine and water; heating the prepared mixture at 70-80°C for 10-20 minutes; adding hydrogen, which binds this anti-microbial agent to soy protein and at least one natural anti-microbial agent selected from the group of isocyanate, cinnamaldehyde, garlic oil, and rosemary oil. The food packaging is obtained by coating the prepared anti-microbial composition onto the inner synthetic film.

Patent application No. US 2004043238 A1 relates to "Packaging film, package and process for aseptic packaging". A multilayer packaging film, package and process for aseptic packaging applications. The multilayer packaging film includes (a) an inner sealant layer comprising a olefin polymer having a Vicat Softening Point greater than 90°C.; (b) an oxygen barrier layer; and (c) an out er layer comprising a polymeric layer selected from olefin polymers and polyester homopolymers or copolymers having a silicone or other hydrogen peroxide resistant exterior coating, said outer layer having a Vicat Softening Point greater than 90°C.; wherein said multilayer packaging film is irradiated at a dosage in an amount sufficient to kill microorganisms entrapped between layers of said film.

In the prior art, the coating material and the anti-microbial agent are simultaneously applied on the inner surfaces of the packaging materials. Thus, the anti-microbial agent is embedded in the coating material and can not completely show its effect. The anti-microbial materials used can not provide a good adsorption on the surface. In addition, since the anti-microbial materials have contact effect, the packaging must wrap around the product and be flexible.

In conclusion, because of the adversities mentioned above and the inadequacy of the existing solutions, an advancement in the relevant technical field is necessary.

### The Object of the Invention

The present invention aims to solve the above mentioned adversities and has been inspired by the prior art.

The priority object of the invention is to reduce or completely eliminate the use of preservatives in food products.

The invention also aims to provide extended high quality shelf-life for food products with high water activity (aw ≥ 0.7) such as cake, bread.

Another object of the invention is to ensure that the food packaging rendered anti-microbial can be used for all kinds of food products (meat, cheese, etc.).

Still another object of the invention is to render the packaging material used in food products more effectively anti-microbial without disturbing its barrier and adsorption properties and the active properties of the anti-microbial agent.

The invention also aims to be able to use all kinds of natural anti-microbial materials in the production of food packaging.

In parallel to the above objects, the invention is a method to render anti-microbial property to the packaging material using two-step spraying system at the last stage of the production processes of the packaging material, comprising the following process steps:
- the application of binder solution on the inner surface of the packaging material by spraying,
- the application of the anti-microbial solution on the inner surface of the packaging material by spraying after the application of the binder solution on the inner surface of the packaging material,
- drying and making it into a roll.

In order to achieve the objects of the invention, the binder solution and the anti-microbial solution are partially sprayed by a batch double spraying system positioned in line, so that the solutions are not applied on the sealing areas of the packaging material. The said binder solution comprises an urethane-based material with water or solvent. The said anti-microbial solution comprises calcium phosphate based, nano silver nitrate added anti-microbial material.

In alternative embodiments of the invention, the said anti-microbial solution may comprise an individual anti-microbial material selected from the group of lemon, anasone, tangerines, grapefruit, cinnamon leaves, orange, eucalyptus, peppermint, rosemary, thyme, basil, sweet raziyane, pine, ginger, laurel, carnation or a combination thereof.

To achieve the objects of the invention, the anti-microbial solution (O) preferably comprises a solvent preferably ethyl acetate.

To achieve the objects of the invention, to evaporate the solvents in the binder solution and anti-microbial solution applications, the drying process following the spray of the anti-microbial solution is carried out by blowing hot air onto the inner surface of the packaging material.

To achieve the objects of the invention, the material floating in the air after the binder solution and anti-microbial solution applications must be removed from the medium by a suctions system.

To achieve the objects mentioned above, the invention comprises anti-microbial property given food packaging comprising 2.5-10% by weight (w/w) anti-microbial material.

Anti-microbial property given food packaging are used in packing food products with a water activity ≥ 0.7.

To achieve the objects mentioned above, the invention comprises anti-microbial property given food packaging comprising 170-740 ppm silver.

The structural features and characteristics of the invention and all advantages thereof will be more clearly understood by the detailed disclosure given, the figures below and the references to them. Hence, the assessment must be made by taking into account these figures and the detailed disclosure.

### The Figures that Help to Understand of the Invention

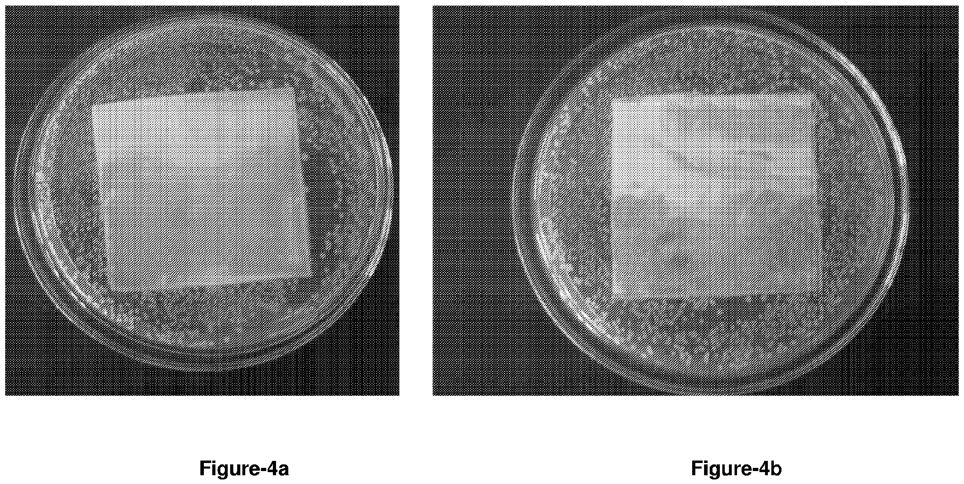

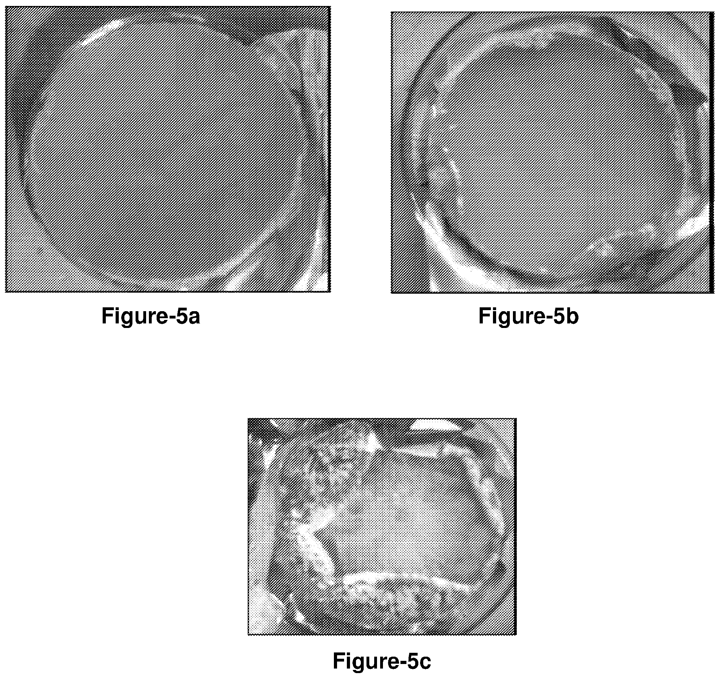

Figure-1a: Representative diagram of the side view of the applications of the production method of the food packaging rendered anti-microbial which is subject of the invention.
Figure-1 b: Representative diagram of the top view of the applications of the production method of the food packaging rendered anti-microbial which is subject of the invention.
Figure-1c: Diagram of the roll of the food packaging rendered anti-microbial which is subject of the invention after production.
Figure-2a: Electron microscope image of the anti-microbial food packaging coated with anti-microbial material by a rotary cylinder (1000x).
Figure-2b: Electron microscope image of the anti-microbial food packaging coated with anti-microbial material by submerging method (1000x).
Figure-3a: Electron microscope image of the food packaging given anti-microbial property by double step spraying technology (500x).
Figure-3b: Electron microscope image of the food packaging given anti-microbial property by double step spraying technology (1000x).
Figure-4a: Image of the result of the anti-bacterial test of the food packaging given anti-microbial property by double step spraying technology.
Figure-4b: Image of the control sample with which the test result given in Figure 4a is compared.
Figure-5a: Image of the antifungal test result of the food packaging given anti-microbial property by double-step spraying technology.
Figure-5b: Image of the antifungal test result of the food packaging given anti-microbial property by double-step spraying technology.
Figure-5c: Image of the control sample with which the test results given in Figures 5a and 5b are compared.

The drawings are not necessarily in scale and the details that are not necessary to understand the present invention have been neglected. In addition, at least substantially identical or at least substantially identical elements are shown by the same letter.

### Explanation of the References

A: Packaging material
B: Outer surface of the packaging material
C: Inner surface of the packaging material
X: Adhesion area
D: Control unit
E: Encoder
F: Photocell
G: Nozzle
H: Suction system
I: Spray template
J: Drainage canal
K: Collection pot
L: Dryer
M: Anti-microbial food packaging roll
N: Binder solution
O: Anti-microbial solution
P: Food packaging

### Detailed Explanation of the Invention

In this detailed disclosure, the production method of the anti-microbial property given food packaging (P) which is subject of the invention is disclosed only for better understanding of the subject, in no way limiting the invention.

The present invention relates to food packaging (P) given anti-microbial property by a double-step spraying technology, to be used in food products with high water activity (aw ≥ 0.7) such as especially cake, bread and similar products, and the production method of the said packaging (P). It is possible to use the anti-microbial food packaging (P) obtained by the method of the invention in packing all kinds of food products (meat, cheese, etc.).

The anti-microbial food packaging (P) of the invention is obtained from the packaging material (A), binder solution (N) and anti-microbial solution (O). Urethane based material with water or solvent, compatible with food, is used as the binder solution (N). The binder solution (N) ensures that the anti-microbial material is adsorbed on the inner surface of the packaging material (C). Preferably water or solvent based lacquer is used as the binder solution (N). All kinds of binder solution (N), with or without lacquer, may be used depending on the kind of the packaging material (A) used.

The anti-microbial solution (O) comprises anti-microbial material dissolved in a solvent. Preferably, nano-silver added, ceramic-based material synthesized by wet chemical method is used. The calcium phosphate derivative hydroxyapatite with high biocompatibility, used as carrier, comprises the silver ions. Silver nitrate known to rapidly release the silver ions is preferred as the silver compound. Many anti-microbial agents are silver-based but they differ in their ionic structures, sizes, carrier structures and bonding mechanisms. The silver compound used in the present invention is produced by nanotechnology. The silver particles of nano-sizes behave differently from large silver particles. Since the nano silver particles achieve a much larger surface area at the nano scale, they have the capacity to destroy a quite large microorganism group (bacteria and fungi) for a long period effectively (Brody et al., 2008; Chaudhry et al., 2008). At the nano size, the silver ions with high anti-microbial property can be combined with the desired materials to be introduced into the material or can be coated onto the surface of the material. During function, the nano silver does not react, its form does not change and it continues functioning. Thus, continuous addition of silver to the system is not required. In addition, it is known that the nano silver particles have more tendency to release their ions in solution when compared to larger silver particles (Rai et al., 2009).

Preferably, ethyl acetate is used as the solvent in the anti-microbial solution (O); however, other solvents may also be used. Ethyl acetate is a strong solvent and evaporated rapidly; thus, it is separated from the surface easily after being used. Ethyl acetate is also used as a hardener in confectionary and some fruits due to its low toxicity and pleasant fragrance. The solvent is used to apply the powder anti-microbial material with the spraying technology. When liquid form anti-microbial agents are used, there is no need to use a solvent.

The anti-microbial property given food packaging (P) comprises 2.5-10% by weight (w/w) anti-microbial material with nano silver added and calcium phosphate based. The anti-microbial solution (O) may also comprise one anti-microbial material selected from the group of lemon, anasone, tangerines, grapefruit, cinnamon leaves, orange, eucalyptus, peppermint, rosemary, thyme, basil, sweet raziyane, pine, ginger, laurel, carnation or a combination thereof. The said natural anti-microbial materials may be in powder form that can be dissolved in a solvent or in liquid form that does not require a solvent.

Composite materials involving more than one material of different sizes are used as the packaging material (A). All kinds of packaging materials used in the food sector such as flexible (PP, PET, PE etc.) or non-flexible (PVC, PET, PS, aluminum, paper, etc.) packaging that can be cold sealed or heat sealed or edible packaging or laminated materials consisting of the said packaging materials can be used as the packaging material (A). In addition, in other packaging methods (thermoform), at the last stage of box, paper, aluminum, etc. film production or before packaging, anti-microbial material may be applied with process additions. It is also possible to apply anti-microbial material to the formed packaging before food is placed.

The method of the present invention to render anti-microbial property to a packaging material (A) by a double-step spraying system in general comprises the following steps:
- preparing or providing the packaging material (A) to be given anti-microbial property,
- spraying the binder solution (N) on to the inner surface (C) of the packaging material,
- the application by spraying of the anti-microbial solution (O) on the inner surface (C) of the packaging material after the application of the binder solution (N) on the inner surface of the packaging material,
- drying.

After the food packaging material (A) to be given anti-microbial property is determined, information and pictures of the food product are printed on the outer surface (B) of the packaging material. In addition, release lacquer is applied on the outer surface (B) of the packaging material to prevent adhesion that may occur between the outer surface (B) of the packaging material and the anti-microbial solution (O) due to pressure during wrapping and opening. It is also possible to apply cold seal or hot seal to the parts of the packaging material (A) that should be sealed to each other in food packing. First, the water or solvent based, food compatible binder solution (N) and then, anti-microbial solution (O) comprising anti-microbial material dissolved in ethyl acetate is partially sprayed onto the inner surface (C) of the packaging material. After spraying the binder solution (N), which will leave no residue after evaporating, the anti-microbial solution (O), obtained by dissolving the silver nitrate added, calcium phosphate based anti-microbial material produced by nanotechnology is applied partially onto the inner surface (C) of the packaging material.

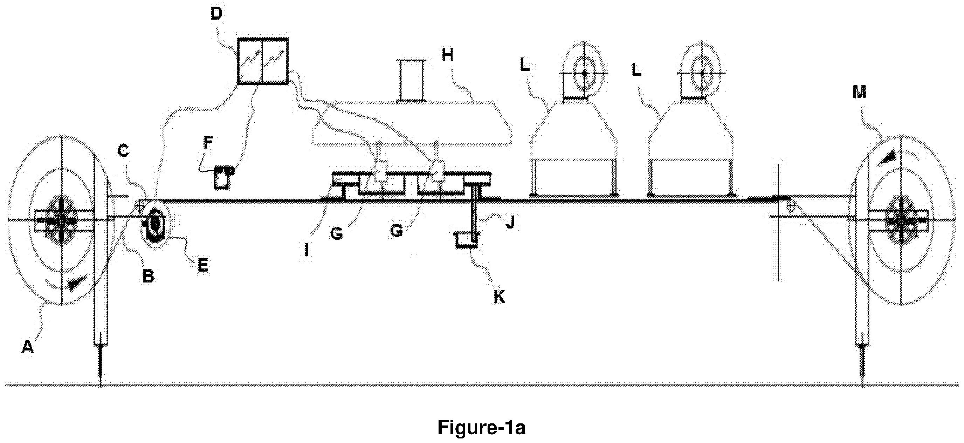

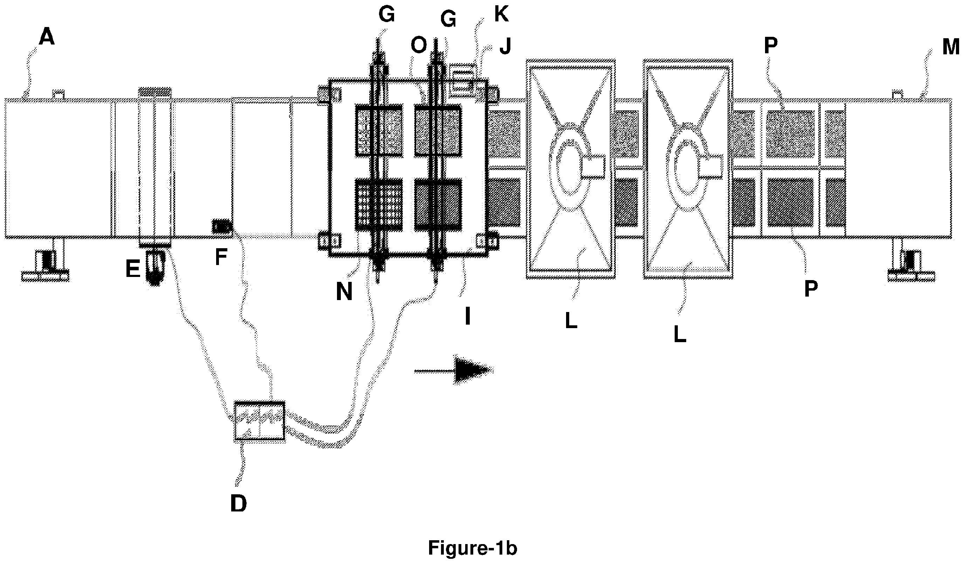

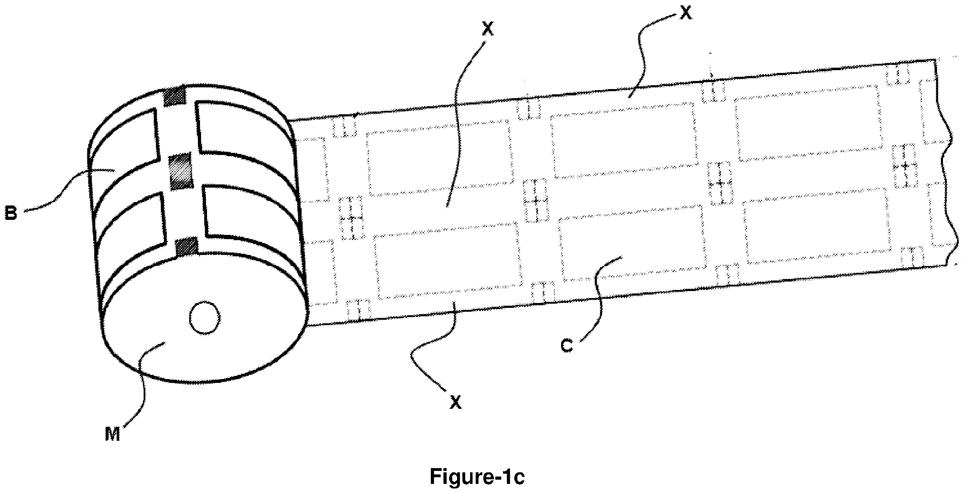

Figure 1a and 1b gives the representative diagrams of the applications of the production method of the food packaging (P), the anti-microbial property is given, which is subject of the present invention. As can be seen in these Figures, firstly, the binder solution (N) is partially sprayed onto the inner surface (C) of the packaging material, so that it does not cover the sealing areas (X) of the packaging material (A), by the first row nozzles (G) controlled by the signal of the photocell (F) connected to the control unit (D) and the encoder (E) information in the consecutive two-row batch spraying unit, which is added after the last stage of the existing production methods of the packaging materials (A). Then, the anti-microbial solution (O) is partially applied onto the same area, so that it does not cover the sealing areas (X) of the packaging material (A), by the second row nozzles (G) controlled by the signal of the photocell (F) connected to the control unit (D) and the encoder (E) information in the spraying unit. During these applications, in order not to damage the sealing areas (X) of the packaging material (A), a spraying template (I), involving gaps to expose the application regions of the packaging material (A), is used. The sealing area (X) is covered with this spraying template (I) and the binder solution (N) and the anti-microbial solution (O) are respectively sprayed onto the exposed surfaces. The solutions (N,O) accumulating in the part of the spraying template (I) on the sections of the packaging material to be sealed (sealing area (X)) are deposited on the side protrusions of the spraying template (I) in time. The accumulated solutions (N,O) flow into the collecting pot (K) through the drainage canal (J) at the edge of the spraying template (I). In addition, the spraying unit also has a suction system (H) to remove the material floating in the air during spraying applications. After the solution (N,O) applications, temperature controlled (50-90°C) hot air is blown from the dryer (L) onto the inner surface (C) of the packaging material. This hot air blowing ensures that the binder solution (N) and the anti-microbial solution (O) are dried and fixed and that the solvent are evaporated. The anti-microbial food packaging (P) obtained is lastly wrapped in the wrapping unit into a roll and an anti-microbial food packaging roll (M) is obtained. Figure-1c gives a representative diagram of the anti-microbial food packaging roll (M), opened to show the parts rendered anti-microbial on the inner surface (C) of the packaging material by the two-step spraying system.

In the present invention, as a result of separate preparation and application by the two-step spraying technology of the binder solution (N) and the anti-microbial solution (O), it becomes possible to coat a specific area of the product or to obtain a thin film layer. Thus, a very thin surface is produced and the anti-microbial material does not remain embedded in the binder and the anti-microbial material with the desired concentration becomes much more effective in virtue of the two-step spraying technology (Figure-3a/3b).

There is no equivalent product to the silver nitrate added, calcium phosphate based anti-microbial material produced by nanotechnology. This anti-microbial material is distinguished from the similar products with respect to these aspects. When assessed with respect to giving anti-microbial property, the two-step spraying method is a different method from the other production methods.

The food packaging (P) rendered anti-microbial by the two-step spraying method comprises 170-740 ppm silver in varying ratios. These ratios are quite adequate to ensure the anti-bacterial and the antifungal properties. Anti-bacterial and antifungal tests have been made on the anti-microbial food packaging (P) to determine the anti-microbial activity. For the anti-bacterial test, the most important food pathogen *E*. *Coli* was used as the indicator organism. The standard contact method was carried out to determine anti-bacterial activity and a decrease in the number of microorganisms was detected above > log 2.5. No bacterial growth was observed at the top and bottom of the anti-microbial food packaging (P) and the reduction for accepting as anti-bacterial was achieved. An example of the control packaging and the food packaging (P) rendered anti-microbial by two-step spraying technology are given in Figures-4a and 4b.

In the antifungal activity test, the most important indicator for fungi, *Aspergillus sp.*, was used. The food packaging (P) rendered anti-microbial and the control samples not coated were put into the nutrient medium and were incubated in sterile glassware at 25°C. At the end of the incubation period, it was observed that the growth at the surface in samples with anti-microbial coating was quite low compared to the control packaging. It was observed that the anti-microbial food packaging (P) has antifungal effect, that it can inhibit fungus growth, that is fungal hyph making micelle, and that the hyph structure can prevent the organism to pass into the reproduction phase (sporing). Control packaging and two different food packaging (P) samples rendered anti-microbial by two-step spraying technique are given in Figures 5a, 5b and 5c.

In virtue of the food packaging (P) rendered anti-microbial of the present invention, it is possible to reduce or completely eliminate the use of preservatives, particularly in food products with high water activity (aw ≥ 0.7). Thus, the anti-microbial food packaging (P) disclosed in the present invention can provide long-term shelf-life of high quality to food. Since the anti-microbial agents used have contact effect, the inner surface (C) of the packaging material, to which they are applied, can be produced with a quality and flexibility so that they wrap the food product and contact it and also they can be produced so that they contact the gas between the food and the packaging and show their effect through the gas. The anti-microbial agent is exposed at the inner surface (C) of the packaging material and contacts food. The anti-microbial property given food packaging (P) of the invention can be used for all kinds of food products. In addition, as a result of the application of the binder solution (N) and the anti-microbial solution (O) to the inner surface (C) of the packaging material independent of each other by two separate process steps (not simultaneously) of spraying technology, it can be ensured that the packaging material (A) becomes anti-microbial without destroying the barrier and sealing properties of the packaging material (A) and the active properties of the anti-microbial agent.

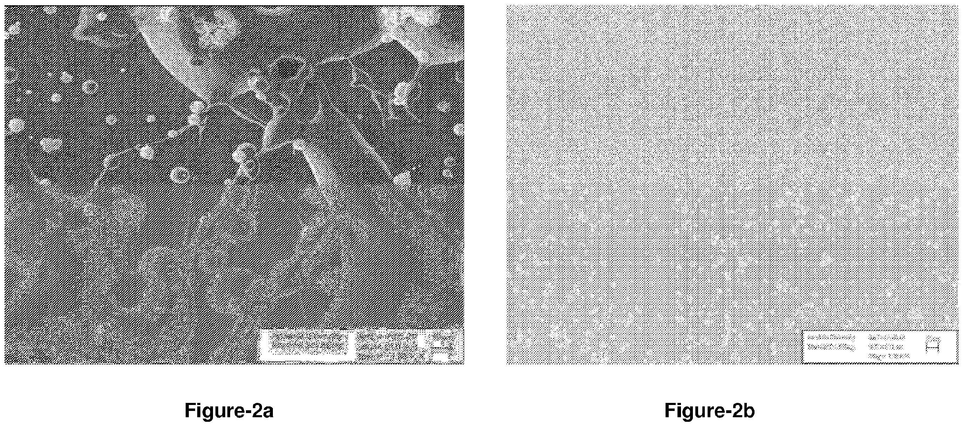

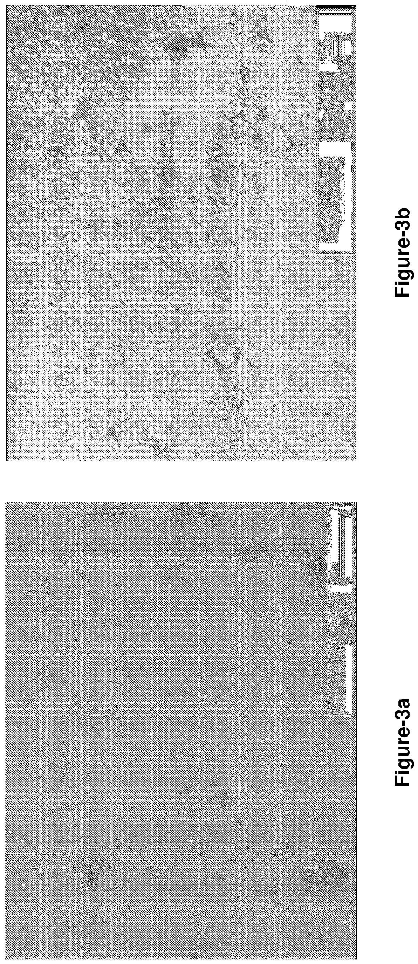

In virtue of the present invention, the hitherto known method of coating an anti-microbial agent onto a film surface has been modified in the production of antimicrobial film. In the initial studies of the present invention, the powdered anti-microbial agent dissolved in the binder solution (N) was applied as a thin layer with a rotary cylinder onto the inner surface of the packaging film, sprayed in the spraying unit or was coated by the submerging technique and then the excess coating material was removed from the product and dried in the drier. Since in such techniques the binder and the anti-microbial agent are applied simultaneously on the packaging, the binder completely covered the anti-microbial powders and hindered the interaction with microorganisms, pellets were formed and the roughness of the surface increased. Increasing the concentration of the anti-microbial material above the planned value increases the cost. The binder solution (N) and the anti-microbial solution (O) were applied separately to eliminate these adversities observed in coating studies and the two-step anti-microbial property rendering method of the present invention was developed. Figures 2a and 2b give the electron microscope images (1000x) of the anti-microbial food packaging coated by the rotary cylinder and the submerging methods.

### REFERENCES

- Appendini, P., Hotchkiss J.H., Review of Antimicrobial Food Packaging, Innnovative Food Science & Emerging Technologies, 3(2), p. 113-126, 2002.
- Brody, A.L., Bugusu, B., Han, J.H., Sand, C.K., Mchugh, T., Innovative Food Packaging Solutions, Journal of Food Science, 73(8), 2008.
- Cha, D.S., Chinnan, M.S., Biopolymer-Based Antimicrobial Packaging: A Review, Critical Reviews in Food Science and Nutrition, 44(4), p.223-237, 2004.
- Chaudhry, Q., Scotter, M., Blackburn, J., Ross, B., Boxall, A., Castle, L., Aitken, R., Watkins, R., Applications and impications of nanotechnologies for the food sector, Food Additives & Contaminants Part A, 25(3), p.241- 258, 2008.
- **Do** 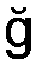 **an, H., Inan, T.Y., Koral, M.,** AG/ZN Zeolit containing antibacterial coating for food -packaging substrates, *Journal of Plastic Film and Sheeting,* **25(3)**, p.4207-4220, 2009.
- EC, Commission Decision of amending Commission Decision 1999/217/EC as regards the register of flavouring substances used in or on foodstuffs, 2002/113/EG. Official Journal 20/02/2002, L49/1-160, 23 January 2002.
- Han, J.H., Antimicrobial food packaging, Food Technology, 54(3), p.56-65, 2000.
- Nedorostova, L., Kloucek, P., Kokoska, L., Stolcova, M., Pulkrabek, J., Antimicrobial properties of selected essential oils in vapour phase against foodborne bacteria, Food Control., 20, p.157-160, 2009.
- **Ozdemir, M., Yurteri, C.U., Sadiko** 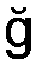 **lu, H.,** Physical polymer surface modification methods and applications in food packaging polymers, *Critical Reviews in Food Science and Technology,* **39,** p.457-477, 1999.
- Rai, M., Yadav, A., Gade, A., Silver Nanoparticles as a New Generation of Antimicrobials, Biotechnology Advances, 27, p.76-83, 2009.
- Schierholz J.M., Lucas L.J., Rump A., Pulverer G., Efficacy of silver-coated medical devices, Journal of Hospital Infection, 40(4), p.257-262, 1998.
- Suppakul, P., Miltz, J., Sonneveld, K., Bigger, S.W., Active Packaging Technologies with an Emphasis on Antimicrobial Packaging and its Applications, Journal of Food Science, 68(2), 2003.
- Vermeiren, L., Devlieghere, F.,Debevere, J. Effectiveness of some recent antimicrobial packaging concepts, Food Additives & Contaminants: Part A, 19(1), p.163-171, 2002.
- Vermeiren, L., Devlieghere, F., van Beest, M., de Kruijf, N., Debevere, J., Developments in the active packaging of foods. Trends in Food Science and Technology, 10, 77±86, 1999.

## Claims

1. A method of rendering packaging material (A) an anti-microbial feature and **characterized in that** it comprises the following process steps:
• the application of binder solution (N) on the inner surface (C) of the packaging material by spraying,
• the application of the anti-microbial solution (O) on the inner surface (C) of the packaging material by spraying after the application of the binder solution (N) on the inner surface (C) of the packaging material,
• drying.

2. The method according to Claim 1, **characterized in that** it comprises the process step of partially spraying the binder solution (N) and the anti-microbial solution (O) with position controlled batch spraying unit in a consecutive two-row, onto the packaging material (A), so that it does not cover the sealing areas (X) of the packaging material (A).

3. The method according to Claim 1, **characterized in that** said binder solution (N) is a urethane based material in water or solvent.

4. The method according to Claim 1, **characterized in that** said anti-microbial solution (O) comprises a nano silver nitrate added, calcium phosphate based anti-microbial agent.

5. The method according to Claim 1, **characterized in that** said anti-microbial solution (O) comprises an individual anti-microbial material selected from the group of lemon, anasone, tangerines, grapefruit, cinnamon leaves, orange, eucalyptus, peppermint, rosemary, thyme, basil, sweet raziyane, pine, ginger, laurel, carnation or a combination thereof.

6. The method according to Claim 1, **characterized in that** said anti-microbial solution (O) comprises a solvent.

7. The method according to Claim 6, **characterized in that** said solvent is ethyl acetate.

8. Food packaging (P) rendered an anti-microbial feature by the method of any one of the above claims and comprising 2.5-10 % by weight (w/w) anti-microbial material.

9. Food packaging (P) rendered an anti-microbial feature by the method of any one of the above Claims 1-7 and comprising 170-740 ppm silver.

## Patentansprüche

1. Verfahren zum Versehen von Verpackungsmaterial (A) mit einem antimikrobiellen Merkmal und **dadurch gekennzeichnet, dass** es die folgenden Prozessschritte umfasst:
• das Aufbringen einer Bindemittellösung (N) auf die Innenfläche (C) des Verpackungsmaterials durch Aufsprühen,
• das Aufbringen der antimikrobiellen Lösung (O) auf die Innenfläche (C) des Verpackungsmaterials durch Aufsprühen nach dem Aufbringen der Bindemittellösung (N) auf die Innenfläche (C) des Verpackungsmaterials,
• Trocknen.

2. Verfahren nach Anspruch 1, **dadurch gekennzeichnet, dass** es den Prozessschritt des teilweisen Aufsprühens der Bindemittellösung (N) und der antimikrobiellen Lösung (O) mit einer positionsgesteuerten Chargensprühanlage mit zwei aufeinanderfolgenden Reihen auf das Verpackungsmaterial (A) derart umfasst, dass es die Dichtungsbereiche (X) des Verpackungsmaterials (A) nicht bedeckt.

3. Verfahren nach Anspruch 1, **dadurch gekennzeichnet, dass** die Bindemittellösung (N) ein Material auf Urethanbasis in Wasser oder Lösungsmittel ist.

4. Verfahren nach Anspruch 1, **dadurch gekennzeichnet, dass** die antimikrobielle Lösung (O) ein mit Nanosilbernitrat versetztes antimikrobielles Mittel auf Calciumphosphatbasis umfasst.

5. Verfahren nach Anspruch 1, **dadurch gekennzeichnet, dass** die antimikrobielle Lösung (O) ein einzelnes antimikrobielles Material umfasst, das aus der Gruppe von Zitrone, Anis, Mandarinen, Grapefruit, Zimtblättern, Orange, Eukalyptus, Pfefferminze, Rosmarin, Thymian, Basilikum, süßer Fenchel, Kiefer, Ingwer, Lorbeer, Nelke oder einer Kombination davon ausgewählt ist.

6. Verfahren nach Anspruch 1, **dadurch gekennzeichnet, dass** die antimikrobielle Lösung (O) ein Lösungsmittel umfasst.

7. Verfahren nach Anspruch 6, **dadurch gekennzeichnet, dass** das Lösungsmittel Ethylacetat ist.

8. Lebensmittelverpackung (P), die durch das Verfahren nach einem der vorhergehenden Ansprüche mit einem antimikrobiellen Merkmal versehen wurde, und 2,5-10 Gew.-% (Gew./Gew.) antimikrobielles Material umfasst.

9. Lebensmittelverpackung (P), die durch das Verfahren nach einem der vorhergehenden Ansprüche 1 bis 7 mit einem antimikrobiellen Merkmal versehen wurde, und 170-740 ppm Silber umfasst.

## Revendications

1. Procédé consistant à rendre un matériau d'emballage (A) une caractéristique antimicrobienne et **caractérisé en ce qu'**il comprend les étapes de processus suivantes :
• l'application d'une solution de liant (N) sur la surface interne (C) du matériau d'emballage par pulvérisation,
• l'application de la solution antimicrobienne (O) sur la surface interne (C) du matériau d'emballage par pulvérisation après l'application de la solution de liant (N) sur la surface interne (C) du matériau d'emballage,
• séchage.

2. Procédé selon la revendication 1, **caractérisé en ce qu'**il comprend les étapes de processus consistant à pulvériser partiellement la solution de liant (N) et la solution antimicrobienne (O) avec une unité de pulvérisation par lots à position contrôlée en deux rangées consécutives, sur le matériau d'emballage (A), de sorte qu'il ne recouvre pas les zones d'étanchéité (X) du matériau d'emballage (A).

3. Procédé selon la revendication 1, **caractérisé en ce que** ladite solution de liant (N) est un matériau à base d'uréthane dans de l'eau ou un solvant.

4. Procédé selon la revendication 1, **caractérisé en ce que** ladite solution antimicrobienne (O) comprend un nitrate d'argent nanométrique ajouté, un agent antimicrobien à base de phosphate de calcium.

5. Procédé selon la revendication 1, **caractérisé en ce que** ladite solution antimicrobienne (O) comprend un matériau antimicrobien individuel choisi dans le groupe constitué du citron, de l'anasone, des mandarines, du pamplemousse, des feuilles de cannelle, de l'orange, de l'eucalyptus, de la menthe poivrée, du romarin, du thym, du basilic, du raziyane doux, du pin, du gingembre, du laurier, de l'œillet ou d'une combinaison de ceux-ci.

6. Procédé selon la revendication 1, **caractérisé en ce que** ladite solution antimicrobienne (O) comprend un solvant.

7. Procédé selon la revendication 6, **caractérisé en ce que** ledit solvant est l'acétate d'éthyle.

8. Emballage alimentaire (P) étant devenu une caractéristique antimicrobienne au moyen du procédé de l'une quelconque des revendications précédentes et comprenant entre 2,5 et 10 % en poids (w/w) du matériau antimicrobien.

9. Emballage alimentaire (P) étant devenu une caractéristique antimicrobienne au moyen du procédé de l'une quelconque des revendications 1 à 7 précédentes et comprenant entre 170 et 740 ppm d'argent.
